# EUROPÄISCHE PATENTANMELDUNG

(11) **EP 1 134 910 A2**
(43) Veröffentlichungstag der Anmeldung: **19.09.2001**
(21) Anmeldenummer: 00890335.3
(22) Anmeldetag: 13.11.2000
(51) Int. Cl.: H04B 3/54

(54) **Nulldurchgangs-Datenübertragung für Versorgungsleitungssystem**

(30) Priorität: 13.03.2000 AT 4132000
(71) Anmelder: Hierzer, Andreas, 8055 Graz (AT)
(72) Erfinder: Hierzer, Andreas, 8055 Graz (AT)
(74) Vertreter: Weinzinger, Arnulf, Dipl.-Ing.

(57) **Zusammenfassung**

System zum Steuern von mehreren an eine gemeinsame elektrische Wechselspannungs-Versorgungsleitung, insbesondere eine Stromschiene (5), angeschlossenen Verbrauchern (1-4), insbesondere Leuchten, mit einem gemeinsamen Steuerteil, der eine Eingabeeinheit (18-21), einen Speicher (16') und einen Steuersender (8) enthält, und mit einzelnen Verbrauchern oder Verbrauchergruppen zugeordneten Empfängern (9-12), die einen Speicher (22') für ihnen zugehörige Adressen haben und Leistungsschalter (26) in Verbindungsleitungen zu den Verbrauchern entsprechend vom Steuersender empfangenen Steuersignalen ansteuern, wobei vom Steuersender (8) als Steuersignale Daten-Bits über die Wechselspannung zur Zeit der Nulldurchgänge der Wechselspannung übertragen werden; der Steuersender (8) steuert einen in der Versorgungsleitung (6) zu den Verbrauchern (1, 2, 3, 4) vorgesehenen Schalter (S) an, um bei Nulldurchgängen die Wechselspannung auf Null zu schalten, wobei unterschiedliche Null-Zeitdauern für verschiedene Bits vorgesehen sind.

## Beschreibung

Die Erfindung betrifft ein System zum Steuern von mehreren an eine gemeinsame elektrische Wechselspannungs-Versorgungsleitung, insbesondere eine Stromschiene, angeschlossenen Verbrauchern, insbesondere Leuchten, mit einem gemeinsamen Steuerteil, der eine Eingabeeinheit, einen Speicher und einen Steuersender enthält, und mit einzelnen Verbrauchern oder Verbrauchergruppen zugeordneten Empfängern, die einen Speicher für ihnen zugehörige Adressen haben und Leistungsschalter in Verbindungsleitungen zu den Verbrauchern entsprechend vom Steuersender empfangenen Steuersignalen ansteuern, wobei vom Steuersender als Steuersignale Daten-Bits über die Wechselspannung zur Zeit der Nulldurchgänge der Wechselspannung übertragen werden.

Aus der US 5 491 463 A ist ein System zur individuellen Ansteuerung von Geräten, unter anderem auch Lampen, bekannt, wobei Adress- und Steuerdaten während der Nulldurchgänge der Versorgungs-Wechselspannung übertragen werden. Im Einzelnen werden dabei als Bit-Signale Bursts mit einer Frequenz von 120 kHz während der Nulldurchgänge der Wechselspannung übertragen. Diese 120 kHz-Signale werden von den Empfängern, die den einzelnen Verbrauchern zugeordnet sind, erfasst und in entsprechende Bits umgesetzt, um die jeweilige Adresse und die jeweilige Steuerinformation zu detektieren. Von Nachteil ist dabei, dass ein eigener 120 kHz-Generator erforderlich ist, um die Burst-Signale zu erzeugen. Überdies müssen die Empfänger mit entsprechenden Detektor-Schaltungen, die Zähler enthalten, ausgestattet sein. Dabei wird es schwierig, die jeweiligen Empfänger-Schaltungen so klein zu konfigurieren, dass sie in Anschlussteilen der Verbraucher, wie insbesondere in herkömmlichen Adaptern von Leuchten, die über Stromschienen versorgt werden, unterzubringen sind.

Es ist daher Ziel der Erfindung, ein System der eingangs angeführten Art vorzusehen, welches mit einfachen Mitteln eine Ansteuerung von Verbrauchern an einer gemeinsamen Versorgungsleitung ermöglicht, wobei die Empfänger besonders einfach und demgemäß, was ihren Raumbedarf anlangt, außerordentlich klein konfiguriert werden können, um so ihren Einbau in den Anschlussteilen der Verbraucher zu ermöglichen.

Das erfindungsgemäße System der eingangs erwähnten Art ist dadurch gekennzeichnet, dass der Steuersender einen in der Versorgungsleitung zu den Verbrauchern vorgesehenen Schalter ansteuert, um bei Nulldurchgängen die Wechselspannung auf Null zu schalten, wobei unterschiedliche Null-Zeitdauern für verschiedene Bits vorgesehen sind.

Beim vorliegenden System werden somit verschieden lange Null-Schaltungen oder "Austastungen" der Versorgungsspannung (Wechselspannung) vorgesehen, um verschiedene Bit-Arten zu definieren, und die Länge der jeweiligen Austastung kann in den Empfängern mit einer einfachen Schaltung, beispielsweise mit einfachsten Prozessoren mit integrierten Zählern, erfasst werden, um die Bit-Art, z.B. "0" bzw. "1", zu detektieren. Die den Empfängern zugeordneten Prozessoren oder dergl. Steuerschaltungen können dabei mit einem Adressenspeicher, z.B. einem Register, ausgestattet werden, der bzw. das eine Minimalkapazität haben kann, da bei Systemen mit einer üblichen Anzahl von Verbrauchern beispielsweise Adressen mit sechs Adressbits problemlos ausreichen. Im Anschluss an derartige Adressen können die jeweiligen Steuerinformationen, wie insbesondere im Fall von Leuchten ein Ein- und Ausschalten, ein rasches Aufwärts- oder Abwärts-Dimmen oder ein langsames Dimmen usw., übertragen werden, wobei die Empfängerschaltung nur soweit eingerichtet zu sein braucht, dass diese Steuerinformationen zu entsprechenden Steuersignalen für die Leistungsschalter in den Verbindungsleitungen zu den Verbrauchern umgesetzt werden. Aufgrund der so erzielbaren Miniaturisierung der Empfängerschaltung eignet sich das vorliegende System in besonders vorteilhafter Weise für Stromschienen-Systeme mit Leuchten bzw. Leuchtengruppen, die über das System "kanalweise" angesteuert werden. Beispielsweise können an ein und derselben Stromschiene fünf oder mehr Leuchten bzw. Leuchtengruppen angeschaltet sein, und diese einzelnen Leuchten oder Leuchtengruppen werden über die "Steuerkanäle" des Systems, entsprechend den zugeteilten Adressen, angesteuert, um die jeweiligen Leuchtenfunktionen vom Steuersender ausgehend zu realisieren. Die Empfängerschaltungen einschließlich der Leistungsschalter können dabei, wie sich gezeigt hat, problemlos in den Leuchten-Adaptern untergebracht werden, die zum mechanischen und elektrischen Anschluss der Leuchten an die Stromschiene dienen. Derartige Adapter sind beispielsweise in der EP 0 877 449 A2 beschrieben.

Die vorliegende Technik, bei der die Länge der Austastungen während der Nulldurchgänge der Wechselspannung die Bit-Art bestimmt, kann auch in einfacher Weise dazu benutzt werden, die Empfänger-Schaltungen mit geringstem Aufwand zu-synchronisieren; hierzu wird vorteilhafterweise vorgesehen, dass durch das Null-Schalten der Wechselspannung bei den Nulldurchgängen, vorzugsweise bei jedem Nulldurchgang, ein Synchronisationssignal für die Empfänger vorgesehen ist. Auf diese Weise kann erreicht werden, dass auch bei Schwankungen der Netzfrequenz die Empfänger immer synchron zum zugehörigen Steuersender sind. Dadurch kann die Schaltung der Empfänger insgesamt zusätzlich vereinfacht werden. Vorzugsweise wird ein derartiges Synchronisations-Signal immer, also bei allen Nulldurchgängen der Wechselspannung, übertragen, d.h. eine entsprechend definierte Austastung vorgenommen, so dass die am System angeschalteten Empfänger immer synchronisiert werden.

Diese grundsätzlichen Nullschaltungen oder Austastungen, beispielsweise mit vorgegebener minimaler Dauer, werden zweckmä-ßigerweise auch als eine Bit-Art definiert, z.B. als "0"-Bit, wobei sich im Falle eines Austastens zwecks Gewinnung eines Synchronisationssignals bei allen Nulldurchgängen ergibt, dass laufend zumindest "0"-Bits vom Steuersender zu den Empfängern übertragen werden. Diese "0"-Bits für sich bewirken in den Empfängern noch keine Reaktionen, abgesehen von der Synchronisation, sondern erst in Kombination mit anderen Bits. Zweckmäßigerweise wird dabei vorgesehen, dass zum Senden von anderen Bits, z.B. "1"-Bits, verglichen mit den grundsätzlichen Null-Schaltungen der Wechselspannung Null-Schaltungen längerer Zeitdauer vorgesehen sind. Um verlässlich auf Seiten der Empfänger zu erkennen, dass ein Steuersignal übertragen wird, ist es überdies vorteilhaft, wenn lange Null-Schaltungen als Startbit, die grundsätzlichen kurzen Null-Schaltungen als "0"-Bits, und mittlere Null-Schaltungen als "1"-Bits definiert sind. Wenn daher in den Empfängern ein Startbit detektiert wird, das durch eine besonders lange Dauer definiert ist, so werden die Empfänger für eine nachfolgende Datenübertragung vorbereitet; es können unmittelbar auf das Startbit beispielsweise sechs Adressbits folgen, um den gewünschten Empfänger anzusprechen, und nach Senden dieses Adress-codes werden die gewünschten Steuerinformationen, wie "Einschalten", "Ausschalten", "schnelles" oder "langsames Aufwärtsdimmen" bis zu einem "bestimmten Helligkeitspegel" oder aber "schnelles" bzw. "langsames Abwärtsdimmen" auf dunkel usw., übertragen werden. Dies kann durch Vorsehen entsprechender Bitgruppen, d.h. Codes, geschehen, die in den Empfängern als entsprechende Steuerbefehle für die Ansteuerung des jeweiligen Leistungsschalters erkannt und umgesetzt werden. Für eine sichere Detektion der Bits in den Empfängern hat es sich dabei als vorteilhaft erwiesen, wenn die Startbits eine Länge von 1000 bis 1500 µs, vorzugsweise ca. 1250 µs, die "1"-Bits eine Länge von 500 bis 800 µs, vorzugsweise ca. 625 µs, und die "0"-Bits eine Länge von 100 bis 500 µs, vorzugsweise ca. 400 µs, aufweisen.

Für die Austastungen der Wechselspannung während der Nulldurchgänge ist es auch günstig, wenn jeweils bereits eine vorbestimmte Zeit, z.B. ca. 200 µs, vor dem theoretischen Nulldurchgang die Wechselspannung auf Null geschaltet wird. Dabei ist es zur Erzielung dieser Austastungen in einfacher Weise besonders vorteilhaft, wenn zumindest der Beginn der Null-Schaltung der Wechselspannung durch Vergleich der Wechselspannung mit einem Gleichspannungs-Bezugspegel, z.B. +12 V, festgelegt ist. Weiters ist es günstig, wenn zumindest längere Nullschalt-Zeitdauern durch Zeitzählung mit Hilfe eines Prozessors festgelegt werden. Wenn also die Wechselspannung bereits auf Null geschaltet, d.h. ausgetastet wurde, kann im Steuersender die Länge der Austastung einfach durch Zählen in einem Prozessor, der ein entsprechendes Taktsignal generiert, bestimmt werden.

Für einen hohen Bedienungskomfort ist es weiters vorteilhaft, wenn die Empfänger einen Speicherbereich für selektive Programminformationen, z.B. betreffend vorgebbare Helligkeits-und Dimmfunktionen im Fall von Leuchten als Verbraucher, aufweisen. Bei dieser Ausbildung können mit einfachen Betätigungen, beispielsweise über entsprechende Codes in den vom Steuersender gesendeten Steuersignalen, die gewünschten Ansteuerungen abgerufen werden, indem die entsprechenden Steuerinformationen aus dem Speicher ausgelesen und verarbeitet werden. Selbstverständlich ist es aber auch möglich, jeweils individuelle Ansteuerungen in an sich herkömmlicher Weise vorzusehen, etwa im Falle einer Ansteuerung von Leuchten ein individuelles langsames Auf- oder Abwärtsdimmen auf gewünschte Helligkeitswerte.

Zur Eingabe der jeweiligen Steuerbefehle kann die Eingabeeinheit des Steuersenders beispielsweise eine Infrarot-Übertragungseinrichtung aufweisen, um so über die damit realisierte Fernbedienung die Steuerbefehle zu übermitteln; es können jedoch auch Tasten zur Eingabe der Steuerbefehle vorgesehen sein; überdies ist es vorteilhaft, wenn für eine besonders komfortable Steuerung dem Steuersender eine Eingangs-Schnittstelle zum Anschluss an einen Rechner oder ein Rechnernetz, insbesondere LON, oder ein Bussystem zugeordnet ist.

Die Verbraucher-Empfänger können vorweg ihre jeweiligen Adressen einprogrammiert erhalten, von Vorteil ist es jedoch, wenn sie erst vor Ort, beispielsweise bei Installierung eines Leuchtensystems, mit ihren Adressen versehen werden, und hierzu ist es besonders günstig, wenn die Verbraucher-Empfänger zur Eingabe ihrer Adresse mit einem Infrarot-Eingangskreis versehen sind.

Die Erfindung wird nachstehend anhand von in der Zeichnung dargestellten bevorzugten Ausführungsbeispielen, auf die sie jedoch nicht beschränkt sein soll, noch weiter erläutert. Es zeigen:
Fig.1 ein Blockschaltbild des erfindungsgemäßen Systems mit einem Steuersender und mehreren Verbrauchern in Form von Leuchten mit zugehörigen Empfängern;
Fig.2 ein Blockschaltbild eines einer Leuchte zugeordneten Empfängers;
Fig.3 schematisch einen Infrarot-Dateneingang eines solchen Empfängers zur Eingabe der Adresse des jeweiligen Empfängers;
Fig.4 ein detaillierteres Schaltbild eines Steuersenders;
Fig.4A ein Schaltbild des zugehörigen Leistungsschalters;
Fig.5 ein detaillierteres Schaltbild eines Empfängers;
Fig.6 einen Spannungsverlauf zur Veranschaulichung unterschiedlicher Austastungen in der angelegten Wechselspannung, zur Erzeugung der verschiedenen Bit-Arten; und
Fig.7 einen Spannungsverlauf zur Veranschaulichung eines Beispiels einer Datenübertragung, mit einem Startbit, sechs Adressenbits und einem Paritätsbit.

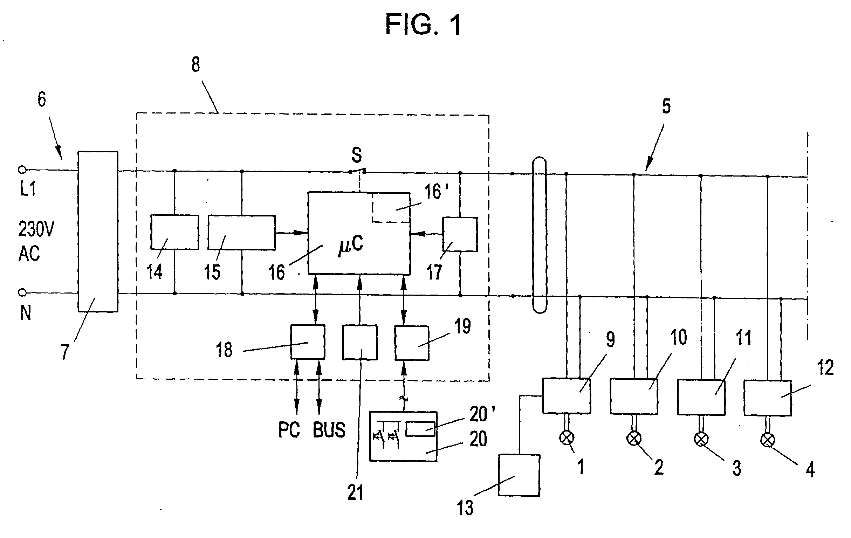

In Fig.1 ist ein System zum zentralen Ansteuern von mehreren Verbrauchern, nämlich im konkreten Ausführungsbeispiel von Leuchten 1, 2, 3 und 4, veranschaulicht. Dabei ist ein Schienen-bzw. Leistungssystem 5 vorgesehen, das zu einer üblichen Wechselspannungs-Versorgungsleitung 6 mit einer Phase L1 und einem Nullleiter N gehört.

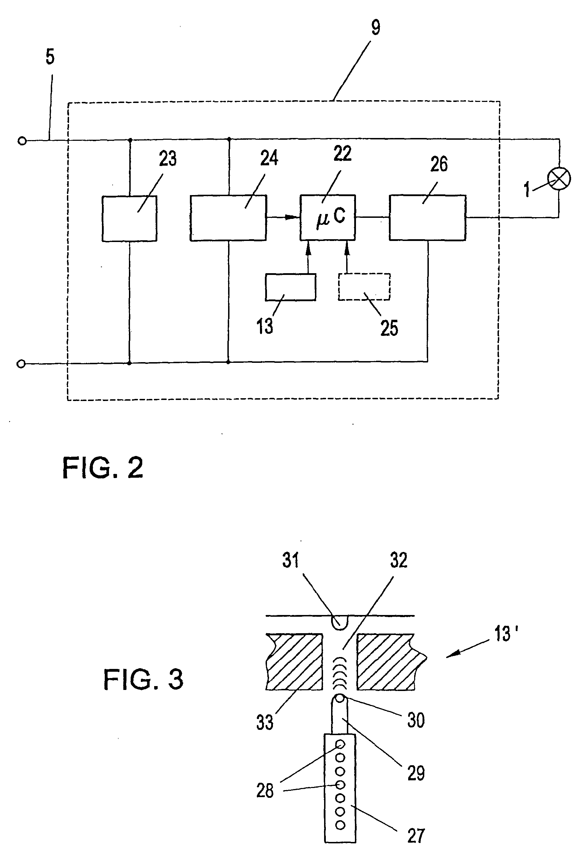

Über ein Netzfilter 7 ist ein zentraler Steuersender 8 an das Versorgungsnetz angeschlossen, und dieser zentrale Steuersender 8 dient dazu, über das Schienen- bzw. Leitungssystem 5 die einzelnen Leuchten 1 bis 4 individuell anzusteuern, d.h. diese beispielsweise ein- oder auszuschalten, schnell oder langsam aufwärts oder abwärts zu dimmen, bestimmte Helligkeitswerte vorzusehen und dergl.. Den Leuchten 1 bis 4 sind Empfänger 9, 10, 11 und 12 zugeordnet, die mit entsprechenden Adressen versehen sind, damit sie vom Steuersender 8 selektiv angesteuert werden können. Zur Adresseneingabe können verschiedene Mittel vorgesehen sein, wie etwa Tasten, vorzugsweise ist jedoch eine Infrarot-Adressdaten-Eingabe vorgesehen, wie nachfolgend noch näher anhand der Fig.2, 3 und 5 erläutert werden wird, und wie dies nur ganz schematisch in Fig.1 beim ersten Empfänger 9 mit einem IR-Empfänger 13 angedeutet ist.

Der Steuersender 8 enthält einen Netzteil 14, einen Nulldurchgangsdetektor 15 mit entsprechender Filterung und als wesentlichen Steuerteil einen Prozessor oder Microcontroller 16. Diesem Prozessor 16 ist im gezeigten Ausführungsbeispiel ein Referenzempfänger 17 zugeordnet, der als Mittel zum Feststellen dient, ob im Fall von Störungen im Netz die gesendeten Signale ordnungsgemäß von den Empfängern empfangen werden konnten; wei ters sind eine Schnittstelle 18 für den Anschluss eines PCs bzw. eines Bussystems und eine Schnittstelle 19 für den Anschluss eines Tasten- bzw. Bedientableaus 20 mit Display 20' vorgesehen. Überdies kann dem Prozessor 16 für eine Fernbedienung ein Infrarot-Empfänger 21 in an sich herkömmlicher Weise zugeordnet sein.

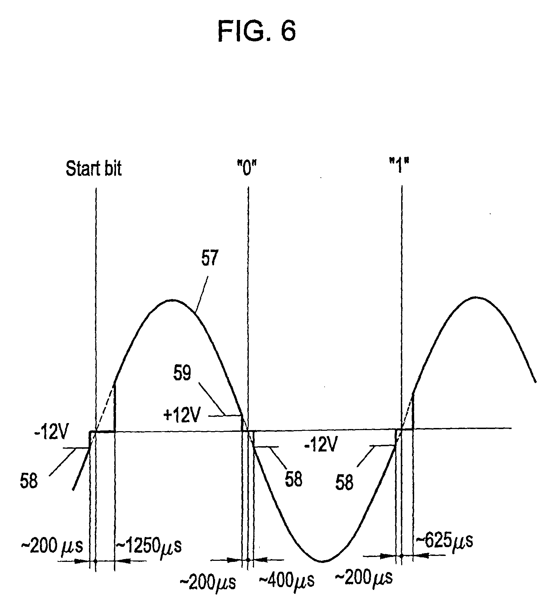

Der Prozessor 16 tastet über einen Leistungsschalter, der in Fig.1 nur schematisch bei S veranschaulicht ist, die Wechselspannung zum Zeitpunkt der Nulldurchgänge aus, wobei die Dauer der Austastungen die Art der zu übertragenden Datenbits festlegt, wie nachfolgend anhand insbesondere der Fig.6 noch näher erläutert werden wird.

In Fig.2 ist in einem Blockschaltbild ein Empfänger gezeigt, beispielsweise der Empfänger 9, der der Leuchte 1 zugeordnet ist. Als wesentlicher Steuerteil ist auch hier ein Prozessor oder Microcontroller 22 vorgesehen, dem zur Spannungsversorgung ein Netzteil 23 zugeordnet ist. Weiters ist ein Nulldetektor 24 dem Prozessor 22 vorgeschaltet, der die Austastungen der Wechselspannung am Schienen- bzw. Leitungssystem 5 erfasst und zur Gewinnung von Synchronisations-Signalen bzw. der übermittelten Datensignale an den Prozessor 22 anlegt.

Der Prozessor 22 hat eine Adresseingabe-Schaltung, wie insbesondere den bereits zuvor erwähnten Infrarot-Empfänger 13.

Gegebenenfalls kann auch für eine Fernbedienung der einzelnen Empfänger 9 usw. unabhängig voneinander ein Infrarot-Empfänger vorgesehen sein, wie in Fig.2 bei 25 mit strichlierten Linien angedeutet ist. Der Prozessor 22 des jeweiligen Empfängers, z.B. 9, steuert abhängig von den ihm übermittelten Steuersignalen bzw. Daten eine Leistungsstufe mit einem Leistungsschalter (TRIAC oder MOSFET) 26 an, der die zugehörige Leuchte, z.B. 1, ein- oder ausschaltet, dimmt usw..

In Fig.3 ist schematisch ein Teil 13' des Infrarot-Empfängers 13 samt einem zugehörigen Infrarot-Sendegerät 27 gezeigt. Das Sendegerät 27 besitzt verschiedene Tasten 28, denen jeweils ein fest verdrahteter Adresscode zugeordnet ist, und bei Drücken einer ausgewählten Taste 28 wird ein entsprechendes, ganz bestimmtes Infrarot-Signal über eine an einem fingerartigen Sendeteil 29 vorgesehene IR-Sendediode 30 abgegeben. Im zugehörigen IR-Empfangsteil 13' des Empfängers, z.B. 9, ist eine IR-Empfangsdiode oder ein IR-Transistor vorgesehen, wie in Fig.3 bei 31 schematisch gezeigt ist, und dieses IR-Empfangselement 31 ist über eine kanalartige, enge Ausnehmung 32 in einem Gehäuseteil 33 zugänglich, wo bei die Empfindlichkeit des Empfangselements 31 so eingestellt sein kann, dass nur dann, wenn das Sendegerät 27 mit dem Finger 29 in die Ausnehmung 32 eingesteckt wird, ein ausreichend starkes Infrarot-Signal für eine Adresseingabe detektiert wird. Hingegen ist die Empfindlichkeit so gewählt, dass das normale Umgebungslicht, wenn kein Sendegerät 27 verwendet wird, zu keinem Ansprechen des IR-Empfangselements 31 führt.

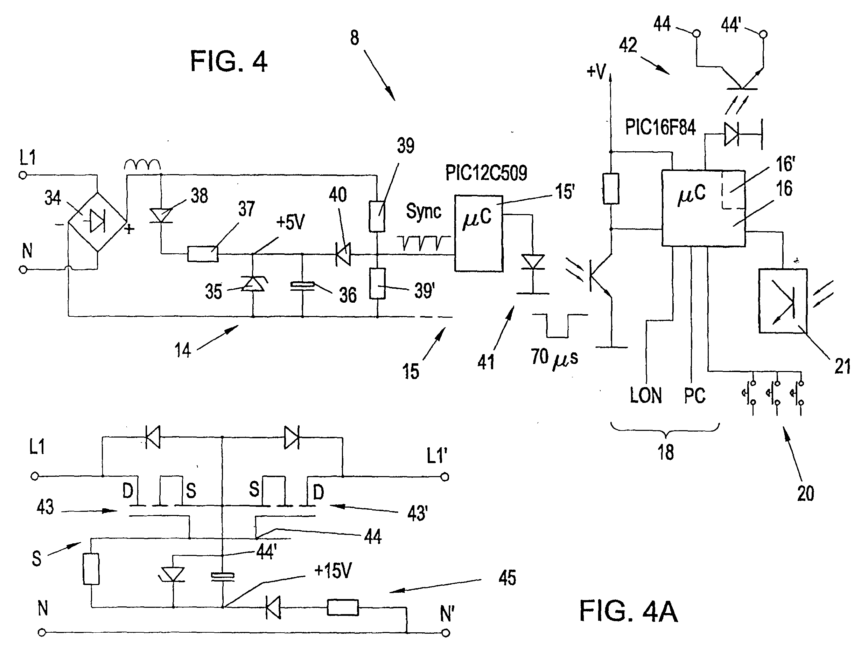

In Fig.4 ist eine detailliertere Schaltung des Steuersenders 8 beispielhaft gezeigt, wobei ersichtlich ist, dass der Netzteil 14 mit einem Grätz-Gleichrichter 34 einerseits sowie zur Spannungsstabilisierung mit einer Zenerdiode 35 und einem zu dieser parallel geschalteten Kondensator 36 ausgebildet ist. Diese Parallelschaltung von Zenerdiode 35 und Kondensator 36 ist über einen Vorwiderstand 37 und eine Diode 38 an den Grätz-Gleichrichter 34 angeschlossen. Die Diode 38 bewirkt, dass die Spannung am +-Pol des Gleichrichters 34 auf 0 gehen kann, während die Spannung am Kondensator 36 auf z.B. 5 V bleibt.

Der Nulldurchgangsdetektor 15 ist gemäß Fig.4 mit einem Prozessor 15' (Microcontroller, µC) ausgebildet, dessen Eingang an einem Spannungsteiler mit Widerständen 39, 39' liegt, wobei der eine Widerstand 39 an den +-Pol des Grätz-Gleichrichters 34 angeschlossen ist. Der Verbindungspunkt der beiden Spannungsteiler-Widerstände 39, 39', an den der Prozessor 15' angeschlossen ist, ist weiters über eine zum Klemmen der Spannung vorgesehene Diode 40 mit der Parallelschaltung von Zenerdiode 35 und Kondensator 36 verbunden, die die Versorgungsspannung für den Prozessor 15' liefert. Auf diese Weise wird dem Prozessor 15', wie schematisch in Fig.4 angedeutet ist, ein 5 V-Gleichspannungssignal mit negativen Impulsen zu den Nulldurchgangs-Zeitpunkten zugeführt.

Das Ausgangssignal des Nulldurchgangsdetektors 15 mit Filterung, d.h. genauer des Prozessors 15', wird über einen Optokoppler 41 dem bereits erwähnten Prozessor 16 zugeführt. Das Ausgangssignal des Prozessors 15' ist dabei durch 70 µs lange negative Impulse gebildet. Diese Impulse werden als Synchronisierimpulse verwendet, und der Prozessor 16 legt nun abhängig davon, welche Bits zu übertragen sind (Startbits, "0"-Bits oder "1"-Bits, vgl. auch Fig.6) die Länge der Austastungen der Netzspannung zu den Nulldurchgangs-Zeitpunkten fest. Hierzu steuert der Prozessor 16 über einen weiteren Optokoppler 42 den Leistungsschalter S an. Eine mögliche Ausführungsform dieses Schalters S ist in Fig.4A näher veranschaulicht. Wie dabei ersichtlich ist, ist der Schalter S mit zwei MOSFETs 43, 43' in Serie ausgebildet, die über Klemmen 44, 44' mit dem Optokoppler 42 (s. Fig.4) verbunden sind, um die entsprechenden Steuersignale für das Austasten der Phasenspannung zugeführt zu erhalten. Zur Spannungsversorgung der MOSFETs 43, 43' ist ferner ein dem Netzteil 14 gemäß Fig.4 vergleichbarer Netzteil 45 vorgesehen, dessen nähere Erläuterung sich hier erübrigen kann.

In Fig.4 ist schließlich noch in Entsprechung zu Fig.1 angedeutet, dass dem Prozessor 16, der einen in Fig.4 schematisch bei 16' veranschaulichten Speicher enthält, zur Eingabe von Befehlssignalen ein Tasten- bzw. Bedientableau 20, ein Infrarot-Empfänger 21 bzw. ein PC- und LON-Interface (bei 18) zugeordnet sind.

An die Klemmen L1', N (s. Fig.4A) ist sodann das gemeinsame Schienensystem 5 (s. Fig.1) mit den Empfängern 9 usw. angeschlossen.

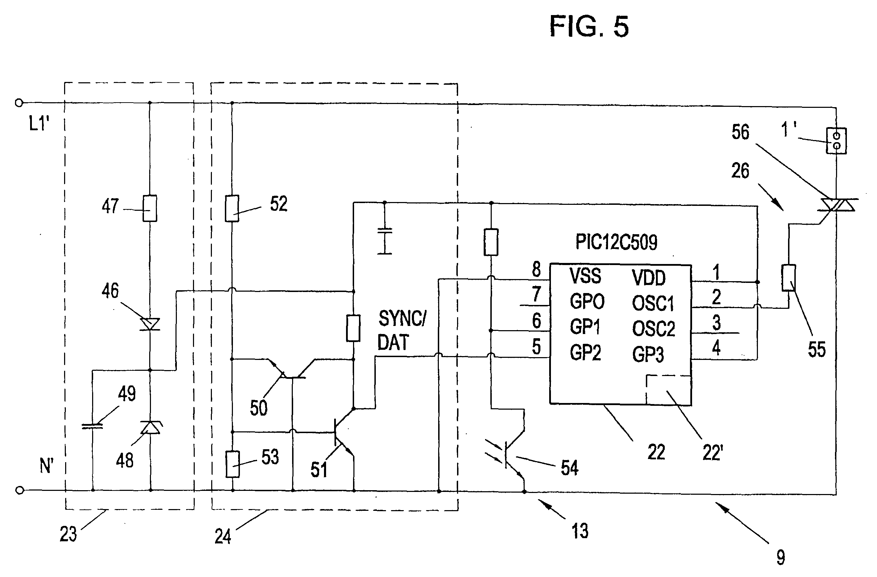

In der Schaltung des Empfängers 9 (und in vergleichbarer Weise auch der anderen Empfänger 10, 11 und 12) ist gemäß Fig.5 der Netzteil 23 beispielsweise mit einer Gleichrichterdiode 46 mit Vorwiderstand 47 aufgebaut, die in Reihe zu einer Parallelschaltung von einer Zenerdiode 48 und einem Kondensator 49 liegt. Der Nulldetektor 24 ist mit einem die negativen Halbwellen filternden Transistor 50 und einem die positiven Halbwellen bildenden Transistor 51 an einem Spannungsteiler 52, 53 aufgebaut, wodurch ein symmetrischer Impuls am Anfang erhalten wird. Das Ausgangssignal (SYNC/DAT) dieses Nulldetektors 24 wird an den Prozessor 22 gelegt, wobei der Prozessor 22 aus der Länge der Nullschaltungen oder Austastungen erkennt, ob ein "0"-Bit, "1"-Bit oder Startbit vorliegt, vgl. die nachfolgenden Erläuterungen zu Fig.6. An einem weiteren Eingang des Prozessors 22 liegt ein Fototransistor 54, der Teil der Infrarot-Empfängerschaltung 13 ist, mit dem dem Prozessor 22 die zugehörigen Adressdaten zugeführt werden können. Am Ausgang steuert der Prozessor 22 über einen Widerstand 55 einen als Leistungsschalter 26 vorgesehenen TRIAC-Schalter 56 an, zu dem in Serie der Anschluss 1' der zugehörigen Lampe (1 in Fig.1) geschaltet ist.

In Fig.6 ist bei 57 der Verlauf einer Wechselspannung veranschaulicht, welche in allen Nulldurchgängen mehr oder weniger kurzzeitig ausgetastet wird. Die Länge dieser Austastungen, die bereits kurz vor dem eigentlichen Nulldurchgang beginnen, bestimmt die Art des jeweils vorgesehenen Bits, wie aus Fig.6 ersichtlich ist. Durch Vergleich der Wechselspannung 57 mit einer negativen Bezugsspannung 58 von -12V bzw. einer positiven Bezugsspannung 59 von +12V im ansteigenden bzw. abfallenden Teil des Spannungsverlaufs wird die Wechselspannung bereits ca. 200 µs vor dem tatsächlichen Nulldurchgang auf Null gesetzt, und im Fall eines "0"-Bits, wie in Fig.6 in der Mitte der drei Bits gezeigt ist, erfolgt auch das Zurückkehren auf die Wechselspannung 47 nach weiteren ca. 200 µs. Auf diese Weise wird eine Austastung mit einer Länge von ca. 400 µs (symmetrisch zum Nulldurchgang) erhalten, was als "0"-Bit im jeweiligen Empfänger, z.B. 9, erkannt wird.

Im Falle, dass ein Startbit zu Beginn einer Datensendung vom Steuersender 8 an die Empfänger 9 etc. gesendet werden soll, wird im Prozessor 16 des Steuersenders 8 die Austastung durch entsprechende Zählung eines Takt-Signals im Prozessor 16 wesentlich verlängert, z.B. auf insgesamt ca. 1250 µs. In ähnlicher Weise wird die Austastung im Falle eines "1"-Bits auf eine Dauer von insgesamt ca. 625 µs durch Zählen des Takt-Signals im Prozessor 16 verlängert. Selbstverständlich sind diese Zeitwerte nicht exakt zu verstehen, sondern es können Toleranzen im Bereich von +10% oder +20% akzeptiert werden. Auch bei derartigen Abweichungen ist eine eindeutige Diskrimination im jeweiligen Empfänger, z.B. 9, ohne weiteres möglich.

Der Prozessor 16 des Steuersenders 8 kann weiters auch so programmiert sein, dass er nach jedem Nulldurchgang, mit entsprechender Austastung, ca. 100 µs lang (bei einer Netzfrequenz von 50 Hz) keinen weiteren Nulldurchgang für eine Spannungs-Austastung zulässt, da ein solcher Nulldurchgang nur auf einen Spannungseinbruch im Netz oder dergl., als auf eine Störung, zurückgehen könnte; diese Störungen sollen selbstverständlich nicht zu einer Bit-Erzeugung, wie beschrieben, führen.

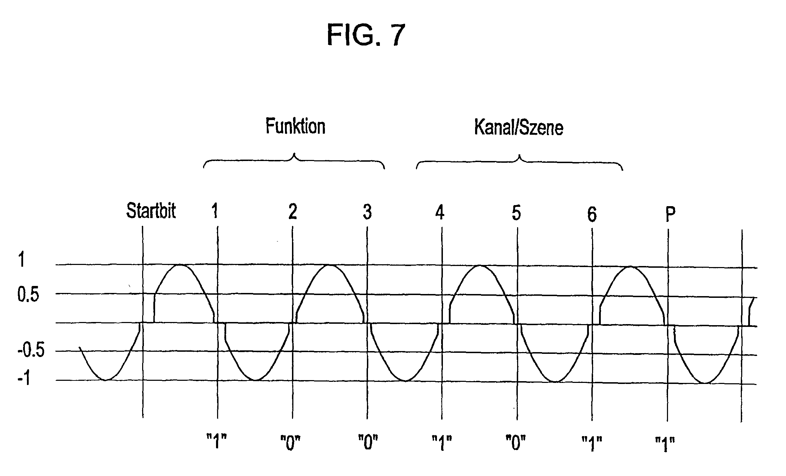

In Fig.7 ist schließlich als Beispiel eine Datenübertragung zu den Empfängern dargestellt. Dabei wird vorab das verhältnismäßig lange Startbit gesendet, das die Empfänger 9 usw. über die kommende Übertragung von Datenbits informiert. Es folgen sodann sechs Datenbits, von denen die ersten drei Bits eine Information über die jeweils gewünschte Funktion beinhalten und die Bits Nummer 4, 5 und 6 die jeweiligen Empfänger oder Empfängergruppen (allgemein den jeweiligen "Kanal") adressieren. Abschließend folgt noch ein Paritätsbit P. Wie ersichtlich können somit insgesamt 2³=8 Kanäle angesteuert werden, und es können 2³=8 Funktionen adressiert werden. Danach können, was in Fig.7 nicht gezeigt ist, noch "1"-Bits folgen, wenn die gewünschte Steuerfunktion ein Dimmen ist. Diese Steuerinformationen werden dabei tatsächlich nur im mit dem zuvor gesendeten Adresscode angesprochenen Empfänger umgesetzt, wobei aufgrund der zuvor gesendeten Funktionsbits z.B. ein schnelles (alle "1"-Bits werden übernommen) oder langsames Dimmen (vorgegebene "1"-Bits werden ausgeblendet) erfolgt. Mit vorgegebenen Bitkombinationen der Funktionsbits können bestimmte Beleuchtungsszenen oder Helligkeitswerte angegeben werden, andere Bitkombinationen bestimmen Aus- und Einschaltfunktionen, z.B. mit Softstart, ebenso wie vorgegebene Dimmwerte für die angeschlossenen Leuchten 1 bis 4. Diese Funktionen bzw. die dafür vorgesehenen Steuersignale für den jeweiligen Leistungsschalter 26 bzw. 56 sind im Prozessor 22 gespeichert, vgl. den in Fig.5 schematisch angedeuteten Speicherbereich 22', so dass bei einem entsprechenden Aufruf durch ein Steuerkommando vom Steuersender 8 her der Leistungsschalter 26 entsprechend angesteuert werden kann.

Mögliche Steuerkommandos sind beispielsweise folgende:
Zum Schalten der einzelnen Leuchten bzw. Empfänger (Aus/Ein; je nach Schaltzustand der Leuchten oder Leuchtengruppen) können z.B. folgende Bit-Kombinationen verwendet werden:

| Start Funkt.Kanal Paritätsbit | |
|---|---|
| "Kanal Nr. 1" | S 0 0 1 0 0 0 1 |
| "Kanal Nr. 2" | S 0 0 1 0 0 1 0 |
| "Kanal Nr. 3" | S 0 0 1 0 1 0 0 |
| "Kanal Nr. 4" | S 0 0 1 0 1 1 1 |
| "Kanal Nr. 5" | S 0 0 1 1 0 0 0 |
| "Kanal Nr. 6" | S 0 0 1 1 0 1 1 |
| "Kanal Nr. 7" | S 0 0 1 1 1 0 1 |
| "Kanal Nr. 8" | S 0 0 1 1 1 1 0 |

Zur Erzielung vorprogrammierter Beleuchtungsszenen können beispielsweise folgende Bit-Kombinationen vorgesehen werden:

| | |
|---|---|
| Szene Nr. 1 | S 0 1 0 0 0 0 1 |
| Szene Nr. 2 | S 0 1 0 0 0 1 0 |
| Szene Nr. 3 | S 0 1 0 0 1 0 0 |
| Szene Nr. 4 | S 0 1 0 0 1 1 1 |
| Szene Nr. 5 | S 0 1 0 1 0 0 0 |
| Szene Nr. 6 | S 0 1 0 1 0 1 1 |
| Szene Nr. 7 | S 0 1 0 1 1 0 1 |
| Szene Nr. 8 | S 0 1 0 1 1 1 0 |

Selbstverständlich sind weitere bzw. andere Steuerkommandos, je nach den Gegebenheiten und je nach Wunsch, vorprogrammierbar, was aber hier nicht weiter zu erläutern ist.

## Patentansprüche

1. System zum Steuern von mehreren an eine gemeinsame elektrische Wechselspannungs-Versorgungsleitung, insbesondere eine Stromschiene (S), angeschlossenen Verbrauchern, insbesondere Leuchten (1-4), mit einem gemeinsamen Steuerteil, der eine Eingabeeinheit (18-21), einen Speicher (16') und einen Steuersender (8) enthält, und mit einzelnen Verbrauchern oder Verbrauchergruppen zugeordneten Empfängern (9-12), die einen Speicher (22') für ihnen zugehörige Adressen haben und Leistungsschalter (26) in Verbindungsleitungen zu den Verbrauchern entsprechend vom Steuersender (8) empfangenen Steuersignalen ansteuern, wobei vom Steuersender (8) als Steuersignale Daten-Bits über die Wechselspannung zur Zeit der Nulldurchgänge der Wechselspannung übertragen werden, dadurch gekennzeichnet, dass der Steuersender (8) einen in der Versorgungsleitung (6) zu den Verbrauchern (1, 2, 3, 4) vorgesehenen Schalter (S) ansteuert, um bei Nulldurchgängen die Wechselspannung auf Null zu schalten, wobei unterschiedliche Null-Zeitdauern für verschiedene Bits vorgesehen sind.

2. System nach Anspruch 1, dadurch gekennzeichnet, dass durch das Null-Schalten der Wechselspannung bei den Nulldurchgängen ein Synchronisationssignal für die Empfänger (9, 10, 11, 12) vorgesehen ist.

3. System nach Anspruch 2, dadurch gekennzeichnet, dass das Null-Schalten der Wechselspannung bei jedem Nulldurchgang erfolgt.

4. System nach einem der Ansprüche 1 bis 3, dadurch gekennzeichnet, dass grundsätzliche Null-Schaltungen der Wechselspannung als eine Bit-Art, z.B."0"-Bits, definiert sind.

5. System nach Anspruch 4, dadurch gekennzeichnet, dass zum Senden von anderen Bits, z.B. "1"-Bits, verglichen mit den grundsätzlichen Null-Schaltungen der Wechselspannung Null-Schaltungen längerer Zeitdauer vorgesehen sind.

6. System nach Anspruch 5, dadurch gekennzeichnet, dass lange Null-Schaltungen als Startbit, die grundsätzlichen kurzen Null-Schaltungen als "0"-Bits, und mittlere Null-Schaltungen als "1"-Bits definiert sind.

7. System nach Anspruch 6, dadurch gekennzeichnet, dass die Startbits eine Länge von 1000 bis 1500 µs, vorzugsweise ca. 1250 µs, die "1"-Bits eine Länge von 500 bis 800 µs, vorzugsweise ca. 625 µs, und die "0"-Bits eine Länge von 100 bis 500 µs, vor zugsweise ca. 400 µs, aufweisen.

8. System nach einem der Ansprüche 1 bis 7, dadurch gekennzeichnet, dass jeweils bereits eine vorbestimmte Zeit, z.B. ca. 200 µs, vor dem theoretischen Nulldurchgang die Wechselspannung auf Null geschaltet wird.

9. System nach Anspruch 8, dadurch gekennzeichnet, dass zumindest der Beginn der Null-Schaltung der Wechselspannung durch Vergleich der Wechselspannung mit einem Gleichspannungs-Bezugs pegel, z.B. +12 V, festgelegt ist.

10. System nach Anspruch 9, dadurch gekennzeichnet, dass zumindest längere Nullschalt-Zeitdauern durch Zeitzählung mit Hilfe eines Prozessors (16) festgelegt werden.

11. System nach einem der Ansprüche 1 bis 10, dadurch gekennzeichnet, dass die Empfänger einen Speicherbereich (22') für selektive Programminformationen, z.B. betreffend vorgebbare Helligkeits- und Dimmfunktionen im Fall von Leuchten als Verbraucher (1, 2, 3, 4), aufweisen.

12. System nach einem der Ansprüche 1 bis 11, dadurch gekennzeichnet, dass die Eingabeeinheit des Steuersenders eine Infrarot-Übertragungseinrichtung (21) aufweist.

13. System nach einem der Ansprüche 1 bis 12, dadurch gekennzeichnet, dass die Eingabeeinheit des Steuersenders Tasten (20) aufweist.

14. System nach einem der Ansprüche 1 bis 13, dadurch gekennzeichnet, dass dem Steuersender (8) eine Eingangs-Schnittstelle (18) zum Anschluss an einen Rechner oder ein Rechnernetz, insbesondere LON, oder ein Bussystem zugeordnet ist.

15. System nach einem der Ansprüche 1 bis 14, dadurch gekennzeichnet, dass die Verbraucher-Empfänger (1, 2, 3, 4) zur Eingabe ihrer Adresse mit einem Infrarot-Eingangskreis (13; 13') versehen sind.
